# FASCICULE DE BREVET EUROPEEN

(11) **EP 3 444 439 B1**
(45) Date de publication et mention de la délivrance du brevet: **17.02.2021**
(21) Numéro de dépôt: 18187606.1
(22) Date de dépôt: 06.08.2018
(51) Int. Cl.: F01D 5/30, F01D 5/14

(54) **TURBINE POUR TURBOMACHINE COMPORTANT DES AUBES COMPRENANT UN PIED PRÉSENTANT UNE FORME S'ÉVASANT AXIALEMENT**
TURBINE FÜR EINE STRÖMUNGSMASCHINE, WELCHE SCHAUFELN BEINHALTET, DEREN SCHAUFELFÜSSE EINE AUFWEITENDE FORM IN AXIALER RICHTUNG AUFWEISEN
TURBINE FOR TURBINE ENGINE COMPRISING BLADES WITH A ROOT HAVING AN EXAPNDING FORM IN AXIAL DIRECTION

(30) Priorité: 18.08.2017 FR 1757737
(43) Date de publication de la demande: 20.02.2019
(73) Titulaire: SAFRAN AIRCRAFT ENGINES, 75015 Paris (FR)
(72) Inventeur: SATRE, Antoine, Frédéric, Jean, 77550 MOISSY-CRAMAYEL (FR); COUSSEAU, Simon, Jean-Marie, Bernard, 77550 MOISSY-CRAMAYEL (FR); PERROT, Erwan, 77550 MOISSY-CRAMAYEL (FR)
(74) Mandataire: Ernest Gutmann - Yves Plasseraud S.A.S.

(56) Documents cités:
- EP-A2- 2 562 355
- FR-A1- 2 973 453
- FR-A1- 2 978 793
- GB-A- 2 115 499
- GB-A- 2 436 132
- US-A- 3 047 268
- US-A- 3 378 230
- US-A- 5 431 542

## Description

### DOMAINE

La présente invention concerne une turbine pour turbomachine, telle par exemple qu'un turboréacteur ou un turbopropulseur d'avion.

### CONTEXTE

Une turbomachine d'avion comporte classiquement, de l'amont vers l'aval, dans le sens d'écoulement de flux gazeux, une soufflante, un compresseur basse pression, un compresseur haute pression, une chambre de combustion, une turbine haute pression et une turbine basse pression. La turbine haute pression est couplée en rotation au compresseur haute pression par un premier arbre, de manière à former un corps haute pression. La turbine basse pression est couplée en rotation à la soufflante et au compresseur basse pression par un second arbre, de manière à former un corps basse pression.

La turbine basse pression comprend en général plusieurs roues aubagées comportant chacune un disque à la périphérie externe duquel sont formées des alvéoles d'engagement de pieds d'aubes, régulièrement réparties autour de l'axe du disque.

Les alvéoles sont généralement usinées par brochage. Selon cette technique, l'outil de coupe utilisé est une broche rectiligne comportant une série de dents espacées longitudinalement les unes des autres. Chaque alvéole est réalisée par déplacement rectiligne de la broche par rapport au disque, de manière à usiner, dent après dent, la périphérie externe du disque. La forme et la dimension des dents varient d'une extrémité à l'autre de la broche, celles de la dernière dent à usiner le disque devant correspondre à celles de l'alvéole. Plusieurs broches successives sont en général utilisées, afin de s'approcher progressivement, broche après broche, de la section définitive de l'alvéole à obtenir. L'opération est répétée pour chaque alvéole à réaliser.

On obtient ainsi des alvéoles qui ont une section constante sur toute la longueur axiale de l'alvéole.

Le document FR 2 933 442 divulgue un tel disque de rotor, dans lequel chaque pied d'aube est maintenu axialement dans une alvéole du disque, par des moyens appropriés. En particulier, un flasque de retenue fixé sur le disque est apte à venir en appui sur chaque pied d'aube, de manière à bloquer le pied d'aube dans l'alvéole, dans une première direction axiale. Par ailleurs, un jonc est maintenu solidaire de l'aube par l'intermédiaire d'un crochet de l'aube, ledit jonc étant apte à venir en appui sur le disque de manière à bloquer l'aube dans une seconde direction axiale, opposée à la première direction. Le pied d'aube est ainsi maintenu axialement dans l'alvéole correspondante, dans les deux directions axiales. Les documents GB 2 115 499 A, US 5 431 542 A et US 3 378 230 A divulguent d'autres exemples d'un disque de rotor.

Une telle structure nécessite un nombre de pièces et/ou un volume de matière important pour réaliser une telle fonction de blocage ou de maintien axial du pied d'aube dans l'alvéole correspondante, ce qui augmente la masse de la turbine et est défavorable au rendement de la turbomachine.

### RESUME DE L'INVENTION

L'invention vise à remédier à cet inconvénient, de façon simple, fiable et peu coûteuse.

A cet effet, l'invention concerne une turbine pour turbomachine, selon la revendication 1.

De cette manière, le pied d'aube est bloqué dans l'alvéole correspondante avec un nombre limité de pièces, ce qui permet d'alléger le rotor de la turbomachine.

Du fait de sa forme évasée, le pied d'aube peut ainsi comporter des parois latérales obliques par rapport à la direction axiale. De telles parois obliques permettent de mieux répartir les contraintes mécaniques en augmentant les zones de contact ou de butée entre le pied d'aube et l'alvéole.

Par opposition, un épaulement radial permettrait de réaliser un blocage axial dans la première direction, mais ne permettrait pas de répartir efficacement les contraintes mécaniques. Cependant, le pied d'aube peut comporter un ou plusieurs épaulements et comporter des surfaces latérales comprenant des zones orientées uniquement axialement. Les contraintes axiales sont alors reprises par les épaulements.

Bien entendu, il est également possible selon l'invention d'utiliser à la fois des surfaces évasées et des épaulements.

La forme évasée du pied d'aube signifie que sa section se réduit de l'amont vers l'aval, ou augmente de l'aval vers l'amont. Une telle augmentation peut être progressive, dans le cas de parois obliques, ou non progressive, dans le cas d'un ou plusieurs épaulements.

La turbine est par exemple une turbine basse pression.

Dans au moins une portion du pied d'aube et de l'alvéole, la section selon un plan de coupe orthogonal à la direction axiale du pied d'aube et de l'alvéole correspondante augmente progressivement dans la seconde direction axiale.

Ladite portion peut s'étendre sur au moins 50% de la dimension axiale du pied d'aube, de préférence au moins 80% de la dimension axiale du pied d'aube.

Au moins une portion du pied d'aube et de l'alvéole peut présenter une paroi latérale oblique formant un angle compris entre 5° et 25° par rapport à l'axe.

Une telle caractéristique permet une reprise maximum de l'effort axial subi par les aubes.

La première direction peut être dirigée de l'amont vers l'aval dans le sens de circulation des gaz au sein de la turbine, la seconde direction étant dirigée de l'aval vers l'amont.

On améliore ainsi la résistance des moyens de blocage en faisant reprendre les efforts les plus importants par la forme évasée de l'alvéole. Celle-ci peut être soumise à des efforts importants par comparaison aux autres moyens de blocage.

Le disque peut comporter au moins une paroi de liaison s'étendant axialement vers l'amont ou vers l'aval, le rotor comportant au moins un anneau fixé à la paroi de liaison.

L'anneau peut comporter des léchettes coopérant avec un bloc de matériau abradable porté par le stator, de manière à former un joint de type labyrinthe.

L'anneau peut venir axialement en appui sur le pied d'aube de manière à bloquer axialement le pied d'aube dans l'alvéole, dans la seconde direction axiale.

L'anneau forme ainsi les moyens de blocage précités.

L'anneau vient par exemple en appui au niveau de l'extrémité amont du pied d'aube, par rapport au sens de circulation du flux de gaz.

Le rotor peut comporter au moins un jonc d'appui solidaire axialement de l'aube, le jonc étant apte à prendre appui sur le disque de façon à bloquer le pied d'aube dans l'alvéole, dans la seconde direction axiale.

L'aube peut comporter au moins un crochet, le jonc étant retenu axialement sur l'aube par le crochet.

Le jonc est par exemple situé en aval du pied d'aube et de l'alvéole.

Le jonc est par exemple un jonc annulaire, qui peut s'étendre sur toute la circonférence en étant fendu ou qui peut être formé de plusieurs secteurs angulaires, c'est-à-dire être sectorisé.

L'invention concerne également une turbomachine, telle par exemple qu'un turboréacteur ou un turbopropulseur d'avion, comportant une turbine du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue en coupe axiale d'une partie d'une turbine basse pression selon une première forme de réalisation de l'invention,
- la figure 2 est une vue en section selon la ligne A-A de la figure 1,
- la figure 3 est une vue correspondant à la figure 2, illustrant une variante de réalisation de l'invention,
- la figure 4 est une vue correspondant à la figure 2, illustrant une autre variante de réalisation de l'invention,
- la figure 5 est une vue correspondant à la figure 2, illustrant encore une autre variante de réalisation de l'invention,
- la figure 6 est une vue correspondant à la figure 2, illustrant encore une autre variante de réalisation de l'invention,
- les figures 7 et 8 sont des vues correspondant respectivement aux figures 1 et 2, illustrant une deuxième forme de réalisation de l'invention.

### DESCRIPTION DETAILLEE

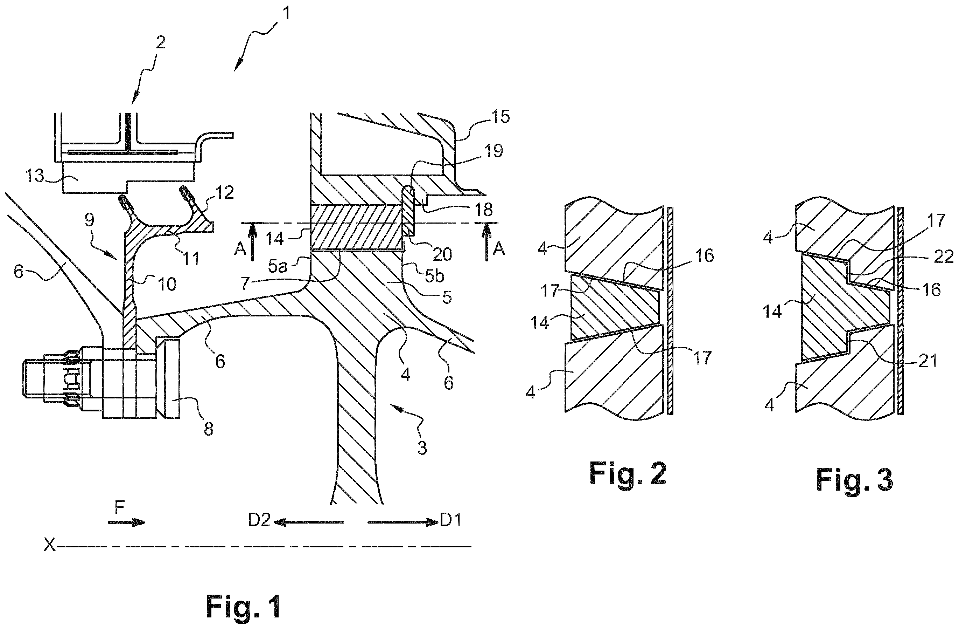

Les figures 1 et 2 illustrent une turbine basse ou haute pression 1 d'une turbomachine d'avion, selon une première forme de réalisation de l'invention.

La turbine 1 comporte un stator 2 et un rotor 3 mobile en rotation autour d'un axe X, qui est l'axe de la turbomachine. Dans la suite de la description, les termes « axial » et « radial » sont définis par référence à l'axe X. Par ailleurs, les termes « amont » et « aval » sont définis par référence au sens de circulation F de flux de gaz au sein de la turbine.

Le rotor 3 comporte un disque 4 comprenant une jante 5 s'étendant radialement et des parois de liaison 6 cylindriques ou coniques s'étendant axialement vers l'amont et vers l'aval depuis la jante 5. La périphérie radialement externe de la jante 5 comporte des alvéoles 7 débouchant radialement vers l'extérieur. Les alvéoles 7 débouchent par ailleurs axialement vers l'amont et vers l'aval, respectivement au niveau d'une paroi radiale amont 5a et d'une paroi radiale aval 5b de la jante 5.

Le rotor 3 peut comporter plusieurs disques 4, reliés les uns aux autres par l'intermédiaire de boulons 8 au niveau des parois de liaison 6.

Un anneau 9 est fixé entre la paroi de liaison 6 amont du disque 4 et la paroi de liaison 6 aval d'un autre disque 4, situé directement en amont. L'anneau 9 comporte une partie s'étendant radialement 10 prolongée à sa périphérie radialement externe par une partie cylindrique 11 s'étendant axialement vers l'aval. Ladite partie cylindrique comporte des léchettes 12 coopérant avec un bloc de matériau abradable 13 porté par le stator 2, de manière à former un joint labyrinthe.

La partie radiale 10 est maintenue entre des extrémités axiales des parois de liaison 6 des disques 4 qui se font face, par l'intermédiaire des boulons 8.

Dans cette forme de réalisation, l'extrémité aval de la partie cylindrique 11 est située à distance du flanc du disque 4. La masse d'un tel anneau 9 est donc limitée. En outre, en diminuant la masse du rotor et la masse portée dans les zones de liaison disque à disque, cela diminue le niveau des contraintes mécaniques vues dans ces zones de liaison disque à disque facilitant de ce fait le dimensionnement de ces zones.

Le rotor 3 comporte de plus des aubes, chaque aube comportant classiquement un pied 14 d'aube, radialement interne, une plate-forme 15, et une pale s'étendant radialement à l'extérieur de la plate-forme 15.

Chaque pied 14 d'aube est monté dans l'une des alvéoles 7 du disque 4, les sections de l'alvéole 7 et du pied 14 d'aube permettant de retenir radialement l'aube sur le disque 4. Une telle section est par exemple une section en queue d'aronde ou une section dite en sapin, comme cela est connu en soi.

Selon l'invention, chaque pied 14 d'aube présente une forme s'évasant axialement vers l'amont, c'est-à-dire se rétrécissant vers l'aval, l'alvéole 7 correspondante présentant une forme complémentaire de manière à bloquer axialement le pied 14 d'aube dans l'alvéole 7, dans une première direction axiale D1.

En particulier, chaque pied 14 d'aube comporte des parois latérales obliques 16 par rapport à la direction axiale, la section se réduisant progressivement et de façon continue de l'amont vers l'aval, ou augmentant progressivement et de façon continue de l'aval vers l'amont.

En d'autres termes, chaque surface latérale 16 du pied 14 d'aube est en contact avec une surface de l'alvéole 17 du disque 4 sur la totalité de ladite surface latérale.

Par ailleurs, le rotor 3 comporte en outre des moyens de blocage venant bloquer le pied 14 d'aube dans l'alvéole 7, dans une seconde direction D2 orientée axialement, opposée à la première direction D1.

Plus particulièrement, la plate-forme 15 de l'aube comporte au moins un crochet 18 délimitant une rainure 19 dans laquelle est engagé un jonc annulaire 20. Le jonc 20 est situé en aval du pied 14 d'aube et de l'alvéole 7. Le jonc 20 peut s'étendre sur toute la circonférence en étant fendu. En variante, le jonc peut être formé de plusieurs secteurs angulaires, c'est-à-dire sectorisé.

Le jonc 20 est ainsi solidaire axialement de l'aube, le jonc 20 étant par ailleurs apte à prendre appui sur la face radiale aval 5b de la jante 5 du disque 4, de façon à bloquer le pied 14 d'aube dans l'alvéole 7, dans la seconde direction axiale D2.

La première direction D1 est dirigée de l'amont vers l'aval et la seconde direction D2 est dirigée de l'aval vers l'amont.

La figure 3 illustre une variante de réalisation, qui diffère de celle décrite en référence aux figures 1 et 2 en ce que le pied 14 d'aube comporte au moins un épaulement 21, l'alvéole 7 comportant un épaulement 22 de forme complémentaire. L'épaulement 21 du pied 14 d'aube peut ou non venir en appui sur l'épaulement 22 de forme de complémentaire de l'alvéole 7, en même temps que les zones obliques 16, 17 des surfaces latérales du pied 14 d'aube et de l'alvéole 7. Dans tous les cas, le blocage axial du pied 14 d'aube dans l'alvéole 7, dans la première direction D1, est réalisé au moins par l'appui des zones obliques 16, 17 des surfaces latérales du pied 14 d'aube et de l'alvéole 7.

De cette manière, le pied 14 d'aube est bloqué dans l'alvéole 7 correspondante avec un nombre limité de pièces, ce qui permet d'alléger le rotor 3 de la turbomachine. Par ailleurs, l'utilisation de parois obliques 16, 17 permet de mieux répartir les contraintes mécaniques en augmentant les zones de contact ou de butée entre le pied 14 d'aube et l'alvéole 7.

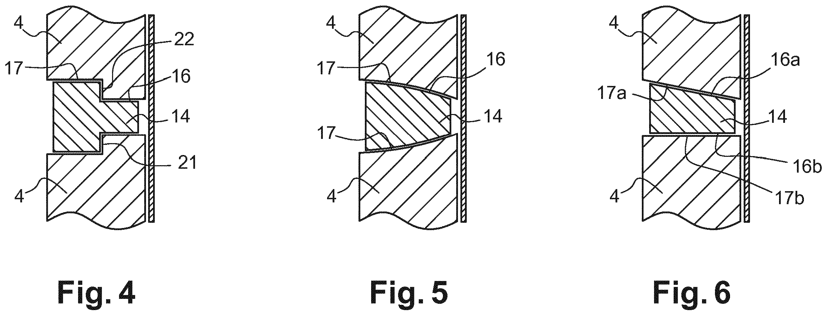

La figure 4 illustre une autre variante de réalisation, qui diffère de celle décrite en référence à la figure 3 en ce que le pied 14 d'aube comporte un épaulement 21 et est dépourvu de zones obliques, les surfaces latérales du pied 14 d'aube et de l'alvéole 7 comporte ainsi des zones orientées axialement.

Les contraintes axiales sont alors reprises par l'épaulement 21 du pied 14 d'aube et par l'épaulement complémentaire 22 de l'alvéole 7.

La figure 5 illustre une autre variante de réalisation, qui diffère de celle décrite en référence à la figure 2 en ce que le pied 14 d'aube comporte des surfaces latérales 16 arrondies, engagées dans un alvéole 7 de forme complémentaire. Les contraintes axiales sont ainsi réparties le long des surfaces latérales 16 arrondies.

La figure 6 illustre une autre variante de réalisation, qui diffère de celle décrite en référence à la figure 2, en ce que le pied 14 d'aube comporte une surface latérale 16a oblique par rapport à la direction axiale et une surface latérale 16b opposée, orientée suivant la direction axiale, l'alvéole 7 présentant des surfaces latérales 17a, 17b de formes complémentaires. Les contraintes axiales sont ainsi réparties le long de la surface oblique 16a.

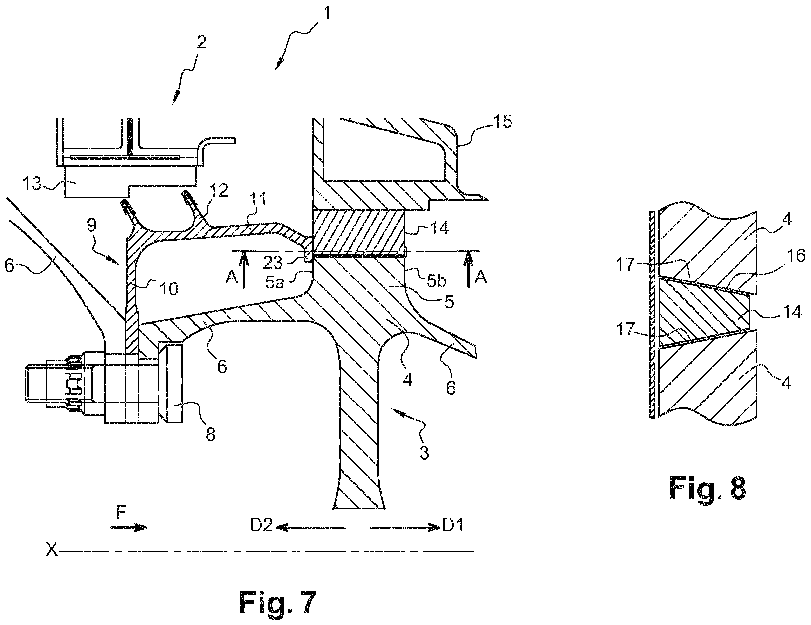

Les figures 7 et 8 illustrent une deuxième forme de réalisation, qui diffère de celle exposée en référence aux figures 1 et 2 en ce que les moyens de blocage dans la seconde direction D2 sont formés par l'anneau 9. Les aubes sont dépourvues de crochet 18 et du jonc 20 venant s'y loger.

Dans cette forme de réalisation, la partie cylindrique 11 de l'anneau 9 est prolongée vers l'aval et l'extrémité aval de ladite partie cylindrique est apte à venir en appui sur les extrémités amont des pieds 14 d'aube, de façon à bloquer chaque pied 14 d'aube dans l'alvéole 7 correspondante, dans la seconde direction D2.

L'extrémité aval de la partie cylindrique 11 de l'anneau 9 peut comporter un rebord 23 annulaire s'étendant vers l'intérieur, ledit rebord 23 servant à l'appui des extrémités amont des pieds 14 d'aubes.

Chaque pied 14 d'aube peut ainsi être bloqué, dans la première direction D1, par l'appui des surfaces latérales évasées du pied 14 d'aube sur les surfaces complémentaires de l'alvéole 7 correspondante et, dans la seconde direction D2, par l'appui de l'extrémité amont du pied 14 d'aube sur le rebord 23 de l'anneau 9.

## Revendications

1. Turbine (1) pour turbomachine comportant un stator (2) et un rotor (3) mobile en rotation autour d'un axe (X) par rapport au stator (2), le rotor (3) comportant au moins un disque (4) dont la périphérie radialement externe comporte des alvéoles (7), le rotor (3) comportant en outre des aubes comprenant chacune un pied (14) d'aube engagé axialement dans une alvéole (7) du disque (4) de façon à retenir radialement l'aube sur le disque (4), dans laquelle l'un au moins des pieds (14) d'aubes présente une forme s'évasant axialement, l'alvéole (7) correspondante présentant une forme complémentaire de manière à bloquer axialement le pied (14) d'aube dans l'alvéole (7), dans une première direction axiale (D1) orientée axialement, des moyens de blocage venant bloquer le pied (14) d'aube dans l'alvéole (7), dans une seconde direction axiale (D2) orientée axialement, opposée à la première direction (D1), **caractérisée en ce qu'** au moins une portion de pied (14) d'aube et de l'alvéole (7) présente une paroi latérale évasée, oblique (16).

2. Turbine (1) selon la revendication 1, **caractérisée en ce que**, dans ladite au moins une portion du pied (14) d'aube et de l'alvéole (7), la section selon un plan de coupe orthogonal à la direction axiale du pied (14) d'aube et de l'alvéole (7) correspondante augmente progressivement dans la seconde direction axiale (D2).

3. Turbine (1) selon la revendication 2, **caractérisée en ce que** ladite portion s'étend sur au moins 50% de la dimension axiale du pied (14) d'aube, de préférence au moins 80% de la dimension axiale du pied (14) d'aube.

4. Turbine selon l'une des revendications 1 à 3, **caractérisée en ce que** la paroi latérale oblique (16) forme un angle compris entre 5° et 25° par rapport à l'axe (X).

5. Turbine (1) selon l'une des revendications 1 à 4, **caractérisé en ce que** la première direction est dirigée de l'amont vers l'aval dans le sens de circulation des gaz au sein de la turbine, la seconde direction étant dirigée de l'aval vers l'amont.

6. Turbine (1) selon l'une des revendication 1 à 5, **caractérisée en ce que** le disque (4) comporte au moins une paroi de liaison (6) s'étendant axialement vers l'amont ou vers l'aval, le rotor (3) comportant au moins un anneau (9) fixé à la paroi de liaison (6), l'anneau (9) comportant des léchettes (12) coopérant avec un bloc de matériau abradable (13) porté par le stator (2), de manière à former un joint de type labyrinthe.

7. Turbine (1) selon la revendication 6, **caractérisée en ce que** les moyens de blocage dans la seconde direction axiale (D2) sont au moins constitués par l'anneau (9) qui vient axialement en appui sur le pied (14) d'aube de manière à bloquer axialement le pied (14) d'aube dans l'alvéole (7), dans la seconde direction axiale (D2).

8. Turbine (1) selon l'une des revendications 1 à 6, **caractérisée en ce que** les moyens de blocage dans la seconde direction axiale (D2) sont au moins constitués par le rotor (3) qui comporte au moins un jonc (20) d'appui solidaire axialement de l'aube, le jonc (20) étant apte à prendre appui sur le disque (4) de façon à bloquer le pied (14) d'aube dans l'alvéole (7), dans la seconde direction axiale (D2).

9. Turbine (1) selon la revendication 8, **caractérisée en ce que** l'aube comporte au moins un crochet (18), le jonc (20) étant retenu axialement sur l'aube par le crochet (18).

10. Turbomachine, telle par exemple qu'un turboréacteur ou un turbopropulseur d'avion, comportant une turbine (1) selon l'une des revendications 1 à 9.

## Patentansprüche

1. Turbine (1) für ein Turbotriebwerk mit einem Stator (2) und einem Rotor (3), der bezüglich des Stators (2) um eine Achse (X) drehbar ist, wobei der Rotor (3) zumindest eine Scheibe (4) enthält, deren radial äußerer Umfang Hohlräume (7) aufweist, wobei der Rotor (3) ferner Rotorschaufeln enthält, die jeweils einen Schaufelfuß (14) aufweisen, der axial in einen Hohlraum (7) der Scheibe (4) eingreift, um die Schaufel radial an der Scheibe (4) zu halten,
wobei zumindest einer der Schaufelfüße (14) eine sich axial erweiternde Form hat, wobei der entsprechende Hohlraum (7) eine komplementäre Form hat, um den Schaufelfuß (14) in einer axial ausgerichteten ersten Richtung (D1) in dem Hohlraum (7) axial zu sichern, sowie Sicherungsmittel, die den Schaufelfuß (14) in einer der ersten Richtung (D1) entgegengesetzten, axial ausgerichteten zweiten axialen Richtung (D2) in dem Hohlraum (7) sichern,
**dadurch gekennzeichnet, dass** zumindest ein Abschnitt des Schaufelfußes (14) und des Hohlraums (7) eine schräg verlaufende, sich erweiternde Seitenwand (16) aufweist.

2. Turbine (1) nach Anspruch 1,
**dadurch gekennzeichnet, dass** in dem zumindest einen Abschnitt des Schaufelfußes (14) und des Hohlraums (7) der Querschnitt in einer zur axialen Richtung des Schaufelfußes (14) und des entsprechenden Hohlraums (7) orthogonalen Schnittebene in der zweiten axialen Richtung (D2) progressiv zunimmt.

3. Turbine (1) nach Anspruch 2,
**dadurch gekennzeichnet, dass** sich der Abschnitt über zumindest 50 % der axialen Abmessung des Schaufelfußes (14), vorzugsweise über zumindest 80 % der axialen Abmessung des Schaufelfußes (14), erstreckt.

4. Turbine nach einem der Ansprüche 1 bis 3,
**dadurch gekennzeichnet, dass** die schräg verlaufende Seitenwand (16) einen Winkel zwischen 5° und 25° bezüglich der Achse (X) einschließt.

5. Turbine (1) nach einem der Ansprüche 1 bis 4,
**dadurch gekennzeichnet, dass** die erste Richtung von stromaufwärts nach stromabwärts in Strömungsrichtung der Gase innerhalb der Turbine gerichtet ist, während die zweite Richtung von stromabwärts nach stromaufwärts gerichtet ist.

6. Turbine (1) nach einem der Ansprüche 1 bis 5,
**dadurch gekennzeichnet, dass** die Scheibe (4) zumindest eine Verbindungswand (6) aufweist, die sich axial stromaufwärts oder stromabwärts erstreckt, wobei der Rotor (3) zumindest einen Ring (9) aufweist, der an der Verbindungswand (6) befestigt ist, wobei der Ring (9) Zungen (12) aufweist, die mit einem Block aus abreibbarem Material (13) zusammenwirken, der von dem Stator (2) getragen wird, um eine Labyrinthdichtung zu bilden.

7. Turbine (1) nach Anspruch 6,
**dadurch gekennzeichnet, dass** die Mittel zum Sichern in der zweiten axialen Richtung (D2) zumindest aus dem Ring (9) bestehen, der axial an dem Schaufelfuß (14) zur Anlage kommt, um den Schaufelfuß (14) in der zweiten axialen Richtung (D2) in dem Hohlraum (7) axial zu sichern.

8. Turbine (1) nach einem der Ansprüche 1 bis 6,
**dadurch gekennzeichnet, dass** die Mittel zum Sichern in der zweiten axialen Richtung (D2) zumindest aus dem Rotor (3) bestehen, der zumindest einen axial fest mit der Schaufel verbundenen Stützring (20) aufweist, wobei der Stützring (20) sich an der Scheibe (4) abstützen kann, um den Schaufelfuß (14) in der zweiten axialen Richtung (D2) in dem Hohlraum (7) zu sichern.

9. Turbine (1) nach Anspruch 8,
**dadurch gekennzeichnet, dass** die Schaufel zumindest einen Haken (18) aufweist, wobei der Stützring (20) über den Haken (18) axial an der Schaufel gehalten wird.

10. Turbotriebwerk, wie etwa Turbostrahltriebwerk oder Turboprop-Triebwerk für Flugzeuge, mit einer Turbine (1) nach einem der Ansprüche 1 bis 9.

## Claims

1. Turbine (1) for a turbine engine, having a stator (2) and a movable rotor (3), rotating around an axis (X), in relation to the stator (2), wherein the rotor (3) comprises at least one disc (4), the radially outer periphery of which comprises cavities (7), wherein the rotor (3) furthermore comprises blades each having a blade root (14) axially engaged in a cavity (7) of the disc (4) so as to radially hold the blade on the disc (4), in which at least one of the blade roots (14) has an axially flaring shape, with the corresponding cavity (7) having a matching shape so as to axially lock the blade root (14) in the cavity (7), in a first axially oriented direction (D1), wherein locking means lock the blade root (14) in the cavity (7) in a second axially oriented direction (D2), opposite the first direction (D1), **characterised in that** at least a portion of the blade root (14) and of the cavity (7) comprises an oblique side wall (16).

2. Turbine (1) according to claim 1, **characterised in that** at least a portion of the blade root (14) and the cavity (7), the section along an orthogonal plane in the axial direction of the blade root (14) and of the corresponding cavity (7) gradually increases in the second axial direction (D2).

3. Turbine (1) according to claim 2, **characterised in that** said portion may extend over at least 50% of the axial dimension of the blade root (14), preferably at least 80% of the axial dimension of the blade root (14).

4. Turbine according to any of claims 1 to 3, **characterised in that** the oblique side wall (16) forms an angle comprised between 5° and 25° in relation to the axis (X).

5. Turbine (1) according to any of claims 1 to 4, **characterised in that** the first direction is oriented from upstream to downstream in the direction of gas circulation within the turbine, with the second direction being oriented from downstream to upstream.

6. Turbine (1) according to any of claims 1 to 5, **characterised in that** the disc (4) comprises at least one connecting wall (6) extending axially in the upstream or downstream direction, wherein the rotor (3) comprises at least one ring (9) attached to the connecting wall (6), with the ring (9 comprising lips (12) interacting with a block of abradable material (13) borne by the stator (2), so as to form a labyrinth-type seal.

7. Turbine (1) according to claim 6, **characterised in that** the locking means in the second axial direction (D2) are at least formed by the ring (9) that bears axially on the blade root (14) so as to lock the blade root (14) axially in the cavity (7), in the second axial direction (D2).

8. Turbine (1) according to any of claims 1 to 6, **characterised in that** the locking means in the second axial direction (D2) at least consist of the rotor (3), which comprises at least one support seal (20) axially integral with the blade, with the seal (20) being adapted to bear against the disc (4) so as to lock the blade root (14) in the cavity (7), in the second axial direction (D2).

9. Turbine (1) according to claim 8, **characterised in that** the blade comprises at least one hook (18), with the seal (20) being held axially on the blade by the hook (18).

10. Turbine engine, such as an aircraft turbojet or a turboprop, comprising a turbine (1) according to any of claims 1 to 9.
